# EUROPEAN PATENT APPLICATION

(11) **EP 2 852 214 A1**
(43) Date of publication of application: **25.03.2015**
(21) Application number: 13791472.7
(22) Date of filing: 07.05.2013
(51) Int. Cl.: H04W 36/00, H04W 76/04

(54) **METHOD, SYSTEM, UE, AND NETWORK DEVICE FOR REPORTING USER EQUIPMENT MOBILITY PARAMETER**

(30) Priority: 14.05.2012 CN 201210148485
(71) Applicant: ZTE Corporation, Shenzhen, Guangdong 518057 (CN)
(72) Inventor: DAI, Qian, Shenzhen Guangdong 518057 (CN); XU, Yingqi, Shenzhen Guangdong 518057 (CN); MAO, Lei, Shenzhen Guangdong 518057 (CN); CUI, Yunpeng, Shenzhen Guangdong 518057 (CN)
(74) Representative: Jansen, Cornelis Marinus
(86) International application number: PCT/CN2013/075279
(87) International publication number: WO 2013/170714

(57) **Abstract**

Disclosed is a method for reporting mobility parameters of a User Equipment (UE), and the method includes: the UE reports its own cell change information to a network side; the UE receives optimized parameters determined by the network side according to the cell change information, and implements parameter configuration according to the optimized parameters. Disclosed are a UE, a network equipment and a system including the aforementioned UE and network equipment for reporting mobility parameters of the UE. In this way, the network side can know mobility related information of the UE and appropriately configure related parameters of the UE, thus decreasing effectively power consumption of the UE and resulted pressure on the network side of using signaling and resources.

## Description

### TECHNICAL FIELD

The present disclosure relates to a technique for reporting mobility parameters of a User Equipment (UE), and in particular to a method and system for reporting mobility parameters of a UE, a UE and a network equipment thereof.

### BACKGROUD

As the gradual increasing of people's living standard, people have more demands for communication, most of which are personalized demands. With the coming out of such demands and their implementation, design of a UE appears a new development tendency, i.e., a smart UE with a large screen.

A smart UE can provide a user with various services, such as from surfing on the Internet to installation and uninstallation of a software, this makes application services of a UE more completed, thus enriching the life of a user. But, with the widespread application of a smart UE, disadvantages of the UE and its impacts on an existing network side show up gradually.

With respect to a smart UE itself, it has a big power consumption and thus a relatively limited standby time and service time; with respect to the network, the large scale application of a smart terminal causes a heavy pressure on the network of using signaling and resources. Reasons for above phenomena are: various applications are operated onstage and backstage in an operation system of a UE, these applications transmit data to or receive data from the network side from time to time. For a smart UE, in order to reduce a delay of data transmission and to better ensure user experiences, after completing one data transmission or reception, the smart UE will maintain a radio resource control connected state for a long time, thus increasing power consumption. However, when a smart UE maintains a connected state for a relatively short time duration (so as to save power), then since non-periodical transmission and reception of data, the smart UE may need to more frequently initiate a random access process and an RRC connection setup process; while when a smart UE maintains a connected state for a relatively long time duration, too much switching operations may be caused, this will increase greatly the pressure on the network of using signaling and control resources.

Therefore, in order to maintain the standby time and service time of a smart UE as long as possible, while taking into account the pressure on the network of using signaling and resources, a time duration for which the smart UE maintain an RRC connected state after completing one data transmission or reception needs to be appropriately controlled, that is to say a balance point of both needs to be found.

It can be concluded from related emulation and analysis that a movement speed of a smart UE is quite a bit in connection with above RRC connected state. In the case when the movement speed is relatively low, a smart UE can maintain the RRC connected state for a relatively long time, in this way, the UE can reduce power consumption by configuring an appropriate parameters for discontinuous reception function while maintaining relatively low overheads for signaling and resources (the occurrence of switching operations is very low); in the case when the movement speed is relatively high, a smart UE can maintain the RRC connected state for a relatively short time, in this way, the UE can save power while reducing overheads for signaling and resources (replacing a switching operation with a cell re-selection).

Therefore, it is necessary for the network side to know information regarding the movement speed of a smart UE so as to control appropriately a time duration for which the UE maintains the RRC connected state. Unfortunately no techniques for controlling appropriately a time duration for which a UE maintains the RRC connected state can be used for reference so far.

### SUMMARY

The present disclosure provides a method and system for reporting mobility parameters of a User Equipment (UE), a UE and a network equipment thereof, which are capable of determining a movement state of a UE according to its own cell related information reported by the UE, and thus mobility parameters of the UE can be adjusted so that the UE maintains an RRC connected state for an appropriate time.

To this end, the technical solutions of the present disclosure are implemented as follows.

A method for reporting mobility parameters of a UE includes:
the UE reports its own cell change information to a network side;
the UE receives optimized parameters determined by the network side according to the cell change information, and implements parameter configuration according to the optimized parameters.

In an embodiment, the cell change information may include at least one of:
a sum of a number of switching operations and cell re-selections occurring in the UE within a preset period;
whether the sum of the number of switching operations and cell re-selections occurring in the UE within the preset period exceeds a preset number threshold;
a frequency at which switching operations and cell re-selections occur in the UE;
a frequency level corresponding to the frequency at which switching operations and cell re-selections occur in the UE;
whether the frequency at which switching operations and cell re-selections occur in the UE exceeds a preset frequency threshold; and
an identifier of a cell passed through by the UE and a residence time within the cell.

In an embodiment, the preset period, the preset number threshold, the frequency level or the preset frequency threshold may be configured through at least one of:
the UE receives a system message, a Radio Resource Control (RRC) signaling or a Medium Access Control Control Element (MAC CE) from the network side, which carries the preset period, the preset number threshold, the frequency level or the preset frequency threshold, and the UE implements corresponding configuration;
the UE pre-arranges with the network side about the preset period, the preset number threshold, the frequency level or the preset frequency threshold.

In an embodiment, the UE reporting its own cell change information to a network side may include:
the UE carries the cell change information in the RRC signaling or the MAC CE, and reports an RRC signaling or the MAC CE carrying the cell change information to the network side.

A method for reporting mobility parameters of a UE includes:
a network side receives cell change information transmitted by the UE, determines a movement speed level of the UE according to the cell change information, optimizes the parameters of the UE according to the movement speed level and transmits the optimized parameters to the UE.

In an embodiment, the cell change information may include at least one of:
a sum of a number of switching operations and cell re-selections occurring in the UE within a preset period;
whether the sum of the number of switching operations and cell re-selections occurring in the UE within the preset period exceeds a preset number threshold;
a frequency at which switching operations and cell re-selections occur in the UE;
a frequency level corresponding to the frequency at which switching operations and cell re-selections occur in the UE;
whether the frequency at which switching operations and cell re-selections occur in the UE exceeds a preset frequency threshold; and
an identifier of a cell passed through by the UE and a residence time within the cell.

In an embodiment, the determining a movement speed level of the UE according to the cell change information may include:
the network side determines the movement speed level of the UE according to the sum of the number of switching operations and cell re-selections occurring within the preset period reported by the UE;
or the network side determines the movement speed level of the UE according to indication information whether the sum of the number of switching operations and cell re-selections occurring within the preset period reported by the UE exceeds the preset number threshold;
or the network side determines the movement speed level of the UE according to a frequency at which the switching operations and cell re-selections occur reported by the UE;
or the network side determines the movement speed level of the UE according to a frequency level corresponding to the frequency at which the switching operations and cell re-selections occur reported by the UE;
or the network side determines the movement speed level of the UE according to an indication whether the frequency at which the switching operations and cell re-selections occur reported by the UE exceeds the preset frequency threshold; and
or the network side determines the movement speed level of the UE according to an identifier of a cell passed through by the UE and a residence time within the cell reported by the UE.

In an embodiment, the transmitting optimized parameters to the UE may include:
the network side carries the optimized parameters in a system message, an RRC signaling or a MAC CE, and reports the system message, the RRC signaling or the MAC CE carrying the optimized parameters to the UE.
A UE includes a reporting unit, a reception unit and a configuration unit, wherein
the reporting unit is configured to report cell change information of the UE to a network side;
the reception unit is configured to receive optimized parameters determined by the network side according to the cell change information; and
the configuration unit is configured to perform parameter configuration on the UE according to the optimized parameters.

In an embodiment, the cell change information may include at least one of:
a sum of a number of switching operations and cell re-selections occurring in the UE within a preset period;
whether the sum of the number of switching operations and cell re-selections occurring in the UE within the preset period exceeds a preset number threshold;
a frequency at which switching operations and cell re-selections occur in the UE;
a frequency level corresponding to the frequency at which switching operations and cell re-selections occur in the UE;
whether the frequency at which switching operations and cell re-selections occur in the UE exceeds a preset frequency threshold; and
an identifier of a cell passed through by the UE and a residence time within the cell.

In an embodiment, the reporting unit may be further configured to carry the cell change information in the RRC signaling or the MAC CE, and report the RRC signaling or the MAC CE carrying the cell change information to the network side.

A network equipment includes a reception unit, a determination unit, an optimization unit and a transmission unit, wherein
the reception unit is configured to receive cell change information transmitted by the User Equipment (UE);
the determination unit is configured to determine a movement speed level of the UE according to the cell change information;
the optimization unit is configured to optimize parameters of the UE according to the movement speed level; and
the transmission unit is configured to transmit the optimized parameters to the UE.

In an embodiment, the determination unit may be further configured to
determine the movement speed level of the UE according to a sum of a number of switching operations and cell re-selections occurring within a preset period reported by the UE;
or determine the movement speed level of the UE according to indication information whether the sum of the number of switching operations and cell re-selections occurring within the preset period reported by the UE exceeds the preset number threshold;
or determine the movement speed level of the UE according to a frequency at which the switching operations and cell re-selections occur reported by the UE;
or determine the movement speed level of the UE according to a frequency level corresponding to the frequency at which the switching operations and cell re-selections occur reported by the UE;
or determine the movement speed level of the UE according to an indication whether the frequency at which the switching operations and cell re-selections occur reported by the UE exceeds the preset frequency threshold; and
or determine the movement speed level of the UE according to an identifier of a cell passed through by the UE and a residence time within the cell reported by the UE.

In an embodiment, the transmission unit may be further configured to carry the optimized parameters of the UE in a system message, an RRC signaling or a MAC CE, and report the system message, the RRC signaling or the MAC CE carrying the optimized mobility parameters to the UE.

A system for reporting mobility parameters of a UE includes the aforementioned UE and the aforementioned network equipment.

In the present disclosure, a UE reports its own cell change information to a network side, the network side determines optimized parameters of the UE according to the cell change information and transmits the optimized parameters to the UE, and the UE implements related parameter configuration according to the optimized parameters. In this way, the network side can know mobility related information of the UE and appropriately configure mobility related parameters of the UE, thus decreasing effectively power consumption of the UE and resulted pressure on the network side of using signaling and resources.

### BRIEF DESCRIPTION OF THE DRAWINGS

Fig. 1 is a flow chart of a method for reporting mobility parameters of a UE according to embodiment 1 of the present disclosure;
Fig. 2 is a flow chart of a method for reporting mobility parameters of a UE according to embodiment 2 of the present disclosure;
Fig. 3 is a flow chart of a method for reporting mobility parameters of a UE according to embodiment 3 of the present disclosure;
Fig. 4 is a schematic structural diagram of a UE according to embodiments of the present disclosure; and
Fig. 5 is a schematic structural diagram of a network equipment according to embodiments of the present disclosure.

### DETAILED DESCRIPTION

The basic spirits of the present disclosure are: a UE reports its own cell change information to a network side, the network side determines optimized parameters of the UE according to the cell change information and transmits the optimized parameters to the UE, and the UE implements related parameter configuration according to the optimized parameters.

In the present disclosure, the network side includes network elements such as a base station, a radio network controller and the like.

### Embodiment 1

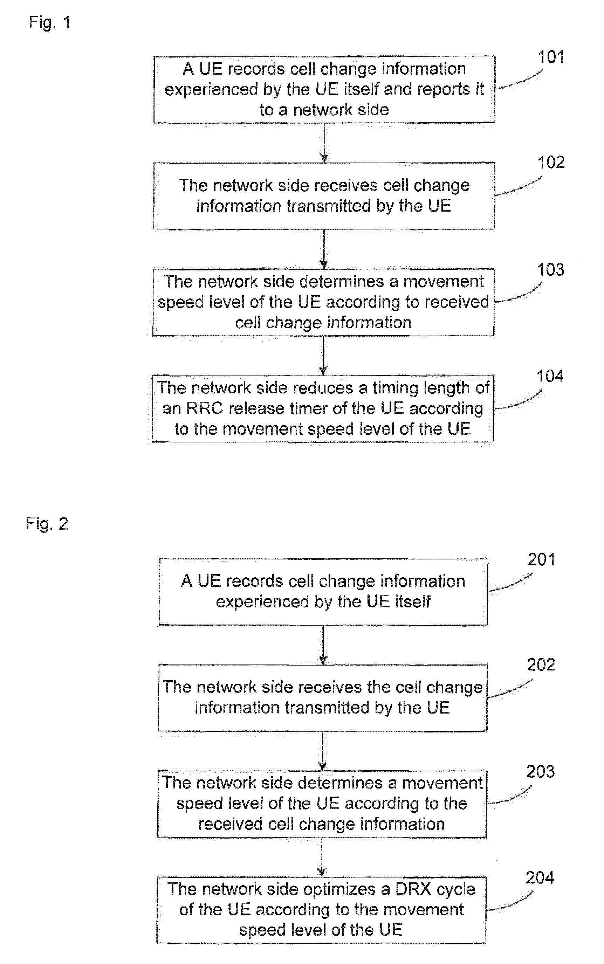

Fig. 1 is a flow chart of the method for reporting mobility parameters of a UE according to embodiment 1 of the present disclosure, as shown in Fig. 1, the method for reporting mobility parameters of a UE in this example includes the following steps:
Step 101, a UE records cell change information experienced by the UE itself and reports it to a network side.

In this step, the cell change information recorded by the UE includes a sum of a number of switching operations and cell re-selections occurring in the UE within a preset period or a flag bit indicating whether the sum of a number of switching operations and cell re-selections occurring in the UE within the preset period exceeds a preset number threshold.

In this step, the preset period and the preset number threshold can be arranged by the UE with the network side, or the network side transmits the preset period and the preset number threshold to the UE through a system message, a Radio Resource Control (RRC) signaling or a Medium Access Control Control Element (MAC CE), and then the UE implements corresponding configuration.

In this step, when cell change information recorded by the UE is the sum of a number of switching operations and cell re-selections occurring in the UE within the preset period, content reported by the UE to the network side is a specific value of the number of switching operations and cell re-selections; when the cell change information recorded by the UE is the flag bit indicating whether the sum of a number of switching operations and cell re-selections occurring in the UE within the preset period exceeds the preset number threshold, the flag bit is represented by bit information in the embodiment, for example, "0" represents that the sum of the numbers doesn't exceed the threshold while "1" represents that the sum of the numbers exceeds the threshold. It is assumed that the flag bit reported by the UE is "1".

In the embodiment, the UE uses an RRC connection request message to carry the cell change information and transmits it to the network side.

Step 102, the network side receives cell change information transmitted by the UE.

Step 103, the network side determines a movement speed level of the UE according to received cell change information.

In the embodiment, the movement speed level of the UE configured by the network side includes high-speed movement and low-speed movement.

In the embodiment, if content of cell change information transmitted by the UE is a sum of a number of switching operations and cell re-selections occurring within the preset period, the network side will compare a specific value of the number with a number threshold configured by the network side:
1) if the movement speed level of the UE configured by the network side is high-speed movement and a number reported by the UE is larger than or equal to the number threshold, the network side determines that the movement speed level of the UE is high-speed movement;
2) if the movement speed level of the UE configured by the network side is low-speed movement and the number reported by the UE is smaller than or equal to the number threshold, the network side determines that the movement speed level of the UE is low-speed movement.

In the embodiment, if content of the cell change information transmitted by the UE is a flag bit indicating whether the sum of a number of switching operations and cell re-selections occurring in the UE within the preset period exceeds the preset number threshold, the network side will determine the movement speed level of the UE according to the flag bit:
1) if the movement speed level of the UE configured by the network side is high-speed movement and the preset number threshold on the UE side corresponds to the level, and if a flag bit reported by the UE is "1", the network side determines that the movement speed level of the UE is high-speed movement;
2) if the movement speed level of the UE configured by the network side is low-speed movement and the preset number threshold on the UE side corresponds to the level, and if the flag bit reported by the UE is "1", the network side determines that the movement speed level of the UE is low-speed movement;

In the embodiment, according to a specific sum of the number and/or the flag bit ("1") reported by the UE, the network side determines that the movement speed level of the UE is high-speed movement.

Step 104, the network side reduces a timing length of an RRC release timer of the UE according to the movement speed level of the UE.

In the embodiment, the movement speed level of the UE is high-speed movement, thus the network side adjusts the RRC release timer of the UE (adjusting a time length for which the UE maintains an RRC connected state after completing one data transmission or reception) to reduce a timing length of the RRC release timer.

### Embodiment 2

Fig. 2 is a flow chart of the method for reporting mobility parameters of a UE according to embodiment 2 of the present disclosure, as shown in Fig. 2, the method for reporting mobility parameters of a UE in this example includes the following steps:
Step 201, a UE records cell change information experienced by the UE itself.

In the embodiment, cell change information recorded by the UE includes: a frequency at which switching operations and cell re-selections occur in the UE; a frequency level corresponding to the frequency at which switching operations and cell re-selections occur in the UE; a flag bit indicating whether the frequency at which switching operations and cell re-selections occur in the UE reaches a preset frequency threshold.

In the embodiment, the frequency level and the preset frequency threshold can be arranged by the UE with the network side, or the network side notifies the UE of the frequency level and the preset frequency threshold through a system message, an RRC signaling or a MAC CE, and then the UE implements corresponding configuration.

In the embodiment, the frequency at which switching operations and cell re-selections occur in the UE is a sum of a number of switching operations and cell re-selections experienced by the UE per unit time.

Depending on the content of cell change information recorded by the UE, the content reported by the UE to the network side may include one of:
1) when the cell change information recorded by the UE is a frequency at which switching operations and cell re-selections occur in the UE, cell change information reported by the UE to the network side is a specific frequency value;
2) when the cell change information recorded by the UE is the frequency level corresponding to the frequency at which switching operations and cell re-selections occur in the UE, according to a frequency level configured by the network side or pre-arranged with the network side, the UE finds a frequency level corresponding to a specific frequency value recorded by the UE and reports the frequency level to the network side:
   ① if the frequency level includes only one specific frequency level for example high frequency or low frequency and the specific frequency value recorded by the UE belongs to the frequency level, the frequency level is reported to the network side;
   ② if the frequency level includes two specific frequency levels for example high frequency and low frequency, the UE finds a frequency level to which the specific frequency value recorded by the UE belongs and reports found frequency level to the network side;
   ③ if the frequency level includes three specific frequency levels for example high frequency, medium frequency and low frequency, the UE finds a frequency level to which the specific frequency value recorded by the UE belongs and reports found frequency level to the network side;
   3) when the cell change information recorded by the UE is the flag bit indicating whether the frequency at which switching operations and cell re-selections occur in the UE reaches a preset frequency threshold, the UE reports to the network side the specific flag bit, and the flag bit can be represented by bit information, for example, "0" represents that the preset frequency threshold is not exceeded while "1" represents that the preset frequency threshold is exceeded.

In the embodiment, the UE uses an RRC Connection Setup Complete Message to carry the above cell change information.

Step 202, the network side receives cell change information transmitted by the UE.

Step 203, the network side determines a movement speed level of the UE according to received cell change information.

In the embodiment, the movement speed level of the UE configured by the network side includes high-speed movement, medium-speed movement and low-speed movement.

In the embodiment, when cell change information transmitted by the UE to the network side is a frequency at which switching operations and cell re-selections occur in the UE, the network side will compare a specific value of the frequency with a frequency threshold configured by the network side, wherein content of the frequency threshold contains upper limit frequency threshold and lower limit frequency threshold, then
1) if a specific value of the frequency reported by the UE is larger than or equal to the upper limit frequency threshold, the network side determines that the movement speed level of the UE is high-speed movement;
2) if a specific value of the frequency reported by the UE is smaller than or equal to the lower limit frequency threshold, the network side determines that the movement speed level of the UE is low-speed movement;
3) if a specific value of the frequency reported by the UE is smaller than or equal to the lower limit frequency threshold and larger than the lower limit frequency threshold, the network side determines that the movement speed level of the UE is medium-speed movement;

In the embodiment, when the cell change information transmitted by the UE to the network side is the frequency level corresponding to the frequency at which switching operations and cell re-selections occur in the UE, then
1) if a frequency level reported by the UE is high frequency, the network side determines that the movement speed level of the UE is high-speed movement;
2) if the frequency level reported by the UE is medium frequency, the network side determines that the movement speed level of the UE is medium-speed movement;
3) if the frequency level reported by the UE is low frequency, the network side determines that the movement speed level of the UE is low-speed movement;

In the embodiment, when the cell change information transmitted by the UE to the network side is the flag bit indicating whether the frequency at which switching operations and cell re-selections occur in the UE reaches a preset frequency threshold, then
1) if a movement speed level of the UE corresponding to a preset frequency threshold on the UE side is high-speed movement, when the flag bit is "1", then the network side determines that the movement speed level of the UE is high-speed movement;
2) if the movement speed level of the UE corresponding to the preset frequency threshold on the UE side is medium-speed movement, when the flag bit is "0", then the network side determines that the movement speed level of the UE is medium-speed movement;
3) if the movement speed level of the UE corresponding to the preset frequency threshold on the UE side is low-speed movement, then the flag bit is "1", then the network side determines that the movement level of the UE is low-speed movement;

In the embodiment, according to a specific frequency, frequency level or flag bit reported by the UE, the network side determines that the movement speed level of the UE is low-speed movement.

Step 204, the network side optimizes a DRX cycle of the UE according to the movement speed level of the UE.

In the embodiment, the movement speed level of the UE is low-speed movement, thus the network side adjusts the Discontinuous Reception (DRX) cycle of the UE, i.e., increasing the length of the DRX cycle of the UE, and transmits optimized DRX parameters to the UE through a MAC CE, an RRC Connection Reconfiguration Message or a system message. According to the configuration on the network side, the UE implements the configuration of the duration of a DRX cycle.

### Embodiment 3

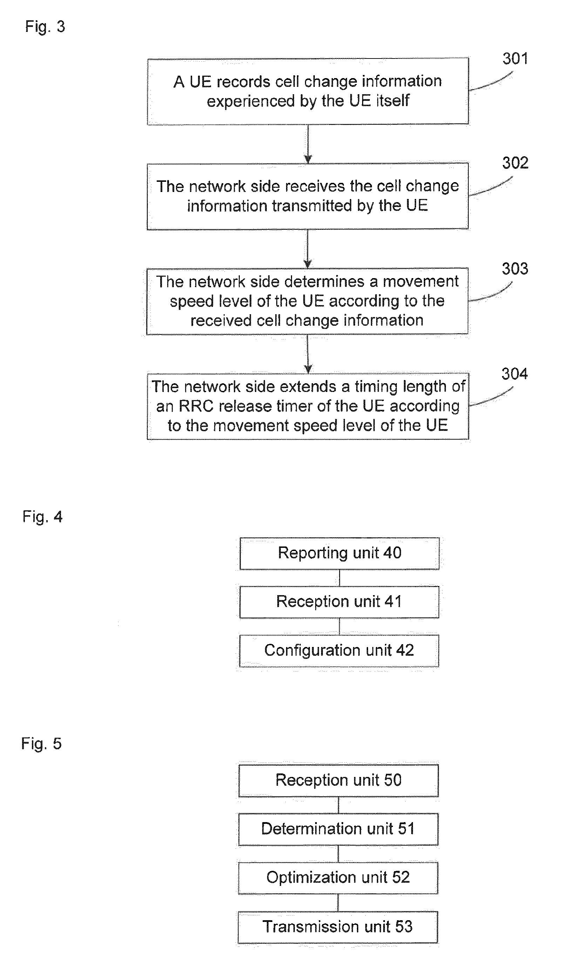

Fig. 3 is a flow chart of the method for reporting mobility parameters of a UE according to embodiment 3 of the present disclosure, as shown in Fig. 3, the method for reporting mobility parameters of a UE in this example includes the following steps:
Step 301, a UE records cell change information experienced by the UE itself.

In the embodiment, cell change information recorded by the UE is an identifier of a cell passed through by the UE and a residence time within the cell.

In the embodiment, the UE uses an RRC Connection Setup Complete Message to carry the above cell change information.

Step 302, the network side receives cell change information transmitted by the UE.

Step 303, the network side determines a movement speed level of the UE according to received cell change information.

In the embodiment, the movement speed level of the UE configured by the network side include high-speed movement and low-speed movement.

In the embodiment, according to an identifier of a cell and a residence time within the cell reported by the UE in combination with a radius of the cell, the network side can calculate a movement speed of the UE, and compare the movement speed with a speed threshold configured by the network side. If a movement speed of the UE calculated by the network side is larger than the speed threshold configured by the network side, the network side determines the movement speed level of the UE is high-speed movement, otherwise low-speed movement.

In the embodiment, according to the identifier of the cell and the residence time within the cell reported by the UE, the network side determines that the movement speed level of the UE is low-speed movement.

Step 304, the network side extends a timing length of an RRC release timer of the UE according to the movement speed level of the UE.

In the embodiment, the movement speed level of the UE is low-speed movement, thus the network side adjusts the RRC release timer of the UE (adjusting a time length for which the UE maintains an RRC connected state after completing one data transmission or reception) to extend a timing length of the RRC release timer.

Fig. 4 is a schematic structural diagram of a UE according to embodiments of the present disclosure, as shown in Fig. 4, the UE according to embodiments of the present disclosure includes a reporting unit 10, a reception unit 41 and a configuration unit 42, wherein
the reporting unit 40 is configured to report cell change information of the UE to a network side;
the reception unit 41 is configured to receive optimized parameters determined by the network side according to the cell change information; and
the configuration unit 42 is configured to perform parameter configuration on the UE according to the optimized parameters.

In an embodiment, the cell change information may include at least one of:
a sum of a number of switching operations and cell re-selections occurring in the UE within a preset period;
whether the sum of the number of switching operations and cell re-selections occurring in the UE within the preset period exceeds a preset number threshold;
a frequency at which switching operations and cell re-selections occur in the UE;
a frequency level corresponding to the frequency at which switching operations and cell re-selections occur in the UE;
whether the frequency at which switching operations and cell re-selections occur in the UE exceeds a preset frequency threshold; and
an identifier of a cell passed through by the UE and a residence time within the cell.

In an embodiment, the reporting unit 40 is further configured to carry the cell change information in the RRC signaling or the MAC CE, and report the RRC signaling or the MAC CE carrying the cell change information to the network side.

In the present disclosure, the network side includes network elements such as a base station, a radio network controller and the like.

It should be appreciated by those skilled in the art that functions implemented by respective processing units of the UE shown in Fig. 4 can be understood with reference to the above related description of the method for reporting mobility parameters of a UE. It should be appreciated by those skilled in the art that functions of respective processing units of the UE shown in Fig. 4 can be implemented by running programs on a processor or by specific logic circuits.

Fig. 5 is a schematic structural diagram of a network equipment according to embodiments of the present disclosure, as shown in Fig. 5, the network equipment according to embodiment of the present disclosure includes a reception unit 50, a determination unit 51, an optimization unit 52 and a transmission unit 53, wherein
the reception unit 50 is configured to receive cell change information transmitted by the User Equipment (UE);
the determination unit 51 is configured to determine a movement speed level of the UE according to the cell change information;
the optimization unit 52 is configured to optimize parameters of the UE according to the movement speed level; and
the transmission unit 53 is configured to transmit optimized parameters to the UE.

In an embodiment, the determination unit 51 is further configured to:
determine the movement speed level of the UE according to a sum of a number of switching operations and cell re-selections occurring within the preset period reported by the UE;
or determine the movement speed level of the UE according to indication information whether the sum of a number of switching operations and cell re-selections occurring within the preset period reported by the UE exceeds the preset number threshold;
or determine the movement speed level of the UE according to a frequency at which the switching operations and cell re-selections occur reported by the UE;
or determine the movement speed level of the UE according to a frequency level corresponding to the frequency at which the switching operations and cell re-selections occur reported by the UE;
or determine the movement speed level of the UE according to an indication whether the frequency at which the switching operations and cell re-selections occur reported by the UE exceeds the preset frequency threshold; and
or determine the movement speed level of the UE according to an identifier of a cell passed through by the UE and a residence time within the cell reported by the UE.

In an embodiment, the transmission unit 53 is further configured to carry the optimized parameters of the UE in a system message, an RRC signaling or a MAC CE, and report the system message, the RRC signaling or the MAC CE carrying the optimized mobility parameters to the UE.

In the present disclosure, the network equipment includes network elements such as a base station, a radio network controller and the like.

It should be appreciated by those skilled in the art that functions implemented by respective processing units of the network equipment shown in Fig. 5 can be understood with reference to the above related description of the method for reporting mobility parameters of a UE. It should be appreciated by those skilled in the art that functions of respective processing units of the network equipment shown in Fig. 5 can be implemented by running programs on a processor or by specific logic circuits.

The present disclosure further describes a system for reporting mobility parameters of a UE, and the system includes the UE shown in Fig. 4 and the network equipment shown in Fig. 5

It should be appreciated by those skilled in the art that the system for reporting mobility parameters of a UE according to embodiments of the present disclosure is a technical solution implemented on the basis of an existing network system architecture, and there are no improvements on the network architecture itself and only functions of part of network elements thereof are improved, i.e., functions of a UE and network-side network elements (core network equipment such as a base station and radio network controller) are improved accordingly. Since the detailed description regarding the improved portion is made above in the method for reporting mobility parameters of a UE, the details thereof will be omitted.

What described are merely preferable embodiments of the present disclosure, and are not intended to limit the present disclosure.

### INDUSTRIAL APPLICABILITY

In the present disclosure, a UE reports its own cell change information to a network side, the network side determines optimized parameters of the UE according to the cell change information and transmits the optimized parameters to the UE, and the UE implements related parameter configuration according to the optimized parameters. In this way, the network side can know mobility related information of the UE and appropriately configure mobility related parameters of the UE, thus decreasing effectively power consumption of the UE and resulted pressure on the network side of using signaling and resources.

## Claims

1. A method for reporting mobility parameters of a User Equipment (UE), comprising:
reporting, by the UE, its own cell change information to a network side;
receiving, by the UE, optimized parameters determined by the network side according to the cell change information, and implementing parameter configuration according to the optimized parameters.

2. The method according to claim 1, wherein the cell change information comprises at least one of:
a sum of a number of switching operations and cell re-selections occurring in the UE within a preset period;
whether the sum of the number of switching operations and cell re-selections occurring in the UE within the preset period exceeds a preset number threshold;
a frequency at which switching operations and cell re-selections occur in the UE;
a frequency level corresponding to the frequency at which switching operations and cell re-selections occur in the UE;
whether the frequency at which switching operations and cell re-selections occur in the UE exceeds a preset frequency threshold; and
an identifier of a cell passed through by the UE and a residence time within the cell.

3. The method according to claim 2, wherein the preset period, the preset number threshold, the frequency level or the preset frequency threshold are configured through at least one of:
receiving, by the UE from the network side, a system message, a Radio Resource Control (RRC) signaling or a Medium Access Control Control Element (MAC CE) carrying the preset period, the preset number threshold, the frequency level or the preset frequency threshold and implementing corresponding configuration;
pre-arranging, by the UE, with the network side about the preset period, the preset number threshold, the frequency level or the preset frequency threshold.

4. The method according to claim 1, wherein the step of reporting, by the UE, its own cell change information to a network side comprises:
carrying, by the UE, the cell change information in the RRC signaling or the MAC CE, and reporting the RRC signaling or the MAC CE carrying the cell change information to the network side.

5. A method for reporting mobility parameters of a User Equipment (UE), comprising:
receiving, by a network side, cell change information transmitted by the UE, determining a movement speed level of the UE according to the cell change information, optimizing parameters of the UE according to the movement speed level and transmitting the optimized parameters to the UE.

6. The method according to claim 5, wherein the cell change information comprises at least one of:
a sum of a number of switching operations and cell re-selections occurring in the UE within a preset period;
whether the sum of the number of switching operations and cell re-selections occurring in the UE within the preset period exceeds a preset number threshold;
a frequency at which switching operations and cell re-selections occur in the UE;
a frequency level corresponding to the frequency at which switching operations and cell re-selections occur in the UE;
whether the frequency at which switching operations and cell re-selections occur in the UE exceeds a preset frequency threshold; and
an identifier of a cell passed through by the UE and a residence time within the cell.

7. The method according to claim 6, wherein the step of determining a movement speed level of the UE according to the cell change information comprises:
determining, by the network side, the movement speed level of the UE according to the sum of the number of switching operations and cell re-selections occurring within the preset period reported by the UE;
or determining, by the network side, the movement speed level of the UE according to indication information whether the sum of the number of switching operations and cell re-selections occurring within the preset period reported by the UE exceeds the preset number threshold;
or determining, by the network side, the movement speed level of the UE according to a frequency at which the switching operations and cell re-selections occur reported by the UE;
or determining, by the network side, the movement speed level of the UE according to a frequency level corresponding to the frequency at which the switching operations and cell re-selections occur reported by the UE;
or determining, by the network side, the movement speed level of the UE according to an indication whether the frequency at which the switching operations and cell re-selections occur reported by the UE exceeds the preset frequency threshold; and
or determining, by the network side, the movement speed level of the UE according to an identifier of a cell passed through by the UE and a residence time within the cell reported by the UE.

8. The method according to claim 5, wherein the step of transmitting the optimized parameters to the UE comprises:
carrying, by the network side, the optimized parameters in a system message, an RRC signaling or a MAC CE, and reporting the system message, the RRC signaling or the MAC CE carrying the optimized parameters to the UE.

9. A User Equipment (UE) comprising a reporting unit, a reception unit and a configuration unit, wherein
the reporting unit is configured to report cell change information of the UE to a network side;
the reception unit is configured to receive optimized parameters determined by the network side according to the cell change information; and
the configuration unit is configured to perform parameter configuration on the UE according to the optimized parameters.

10. The UE according to claim 9, wherein the cell change information comprises at least one of:
a sum of a number of switching operations and cell re-selections occurring in the UE within a preset period;
whether the sum of the number of switching operations and cell re-selections occurring in the UE within the preset period exceeds a preset number threshold;
a frequency at which switching operations and cell re-selections occur in the UE;
a frequency level corresponding to the frequency at which switching operations and cell re-selections occur in the UE;
whether the frequency at which switching operations and cell re-selections occur in the UE exceeds a preset frequency threshold; and
an identifier of a cell passed through by the UE and a residence time within the cell.

11. The UE according to claim 10, wherein the reporting unit is further configured to carry the cell change information in an RRC signaling or a MAC CE, and report the RRC signaling or the MAC CE carrying the cell change information to the network side.

12. A network equipment comprising a reception unit, a determination unit, an optimization unit and a transmission unit, wherein
the reception unit is configured to receive cell change information transmitted by the User Equipment (UE);
the determination unit is configured to determine a movement speed level of the UE according to the cell change information;
the optimization unit is configured to optimize parameters of the UE according to the movement speed level; and
the transmission unit is configured to transmit the optimized parameters to the UE.

13. The network equipment according to claim 12, wherein the determination unit is further configured to:
determining the movement speed level of the UE according to a sum of a number of switching operations and cell re-selections occurring within a preset period reported by the UE;
or determining the movement speed level of the UE according to indication information whether the sum of the number of switching operations and cell re-selections occurring within the preset period reported by the UE exceeds the preset number threshold;
or determining the movement speed level of the UE according to a frequency at which the switching operations and cell re-selections occur reported by the UE;
or determining the movement speed level of the UE according to a frequency level corresponding to the frequency at which the switching operations and cell re-selections occur reported by the UE;
or determining the movement speed level of the UE according to an indication whether the frequency at which the switching operations and cell re-selections occur reported by the UE exceeds the preset frequency threshold; and
or determining the movement speed level of the UE according to an identifier of a cell passed through by the UE and a residence time within the cell reported by the UE.

14. The network equipment according to claim 12 or 13, wherein the transmission unit is further configured to carry the optimized parameters of the UE in a system message, an RRC signaling or a MAC CE, and report the system message, the RRC signaling or the MAC CE carrying the optimized parameters to the UE.

15. A system for reporting mobility parameters of a User Equipment (UE), the system comprising the UE according to any one of claims 9 to 11 and the network equipment according to any one of claims 12 to 14.
